# EUROPEAN PATENT SPECIFICATION

(11) **EP 1 891 457 B1**
(45) Date of publication and mention of the grant of the patent: **23.03.2011**
(21) Application number: 06744162.6
(22) Date of filing: 09.06.2006
(51) Int. Cl.: G01S 5/02, H01Q 1/04, H01Q 7/08

(54) **UNDERWATER NAVIGATION**
UNTERWASSER-NAVIGATION
NAVIGATION SOUS-MARINE

(30) Priority: 13.06.2005 GB 0511941; 15.06.2005 US 690959 P
(43) Date of publication of application: 27.02.2008
(73) Proprietor: WFS Technologies Limited, Livingston West Lothian EH54 5BZ (GB)
(72) Inventor: RHODES, Mark, South Queensferry West Lothian EH30 9RG (GB); HYLAND, Brendan, Edinburgh EH10 6HQ (GB); WOLFE, Derek, Linlithgow West Lothian EH49 6DS (GB)
(86) International application number: PCT/GB2006/002111
(87) International publication number: WO 2006/134327

(56) References cited:
- US-A- 4 458 248
- US-A1- 2004 042 342

## Description

### Introduction

The present invention relates to an underwater navigation system. In particular, the invention relates to the use of underwater electromagnetic propagation to determine a receiver's position relative to a beacon or distributed assembly of beacons.

### Background

Underwater navigation has typically been accomplished using inertial navigation or acoustic beacons. Acoustic systems are degraded by noise and interference from a number of sources. They are also subject to multi-path effects and in some environments are virtually unusable. Inertial navigation systems are complex, bulky, high cost, accumulate inaccuracy over time and require knowledge of an initial reference point.

US 6,865,139 describes a system that uses electromagnetic transmission for navigation along a sub-sea structure. This has a plurality of antennas located at known positions on the sub-sea structure. Each antenna is electrically coupled and includes a cathodic protection anode. Signals emitted by the antennas are used by a detection means on a sub-sea vehicle to allow the vehicle to navigate relative to the sub-sea structure. The detection means uses a measure of the electric field of the emitted signals in order to determine the position of the vehicle.

A problem with the system of US 6,865,139 is that the signals emitted by the electrically coupled antennas are subject to high attenuation of the electric field and the receive antennas have low efficiency. In addition, the system uses cathodic protection anodes as the antennas, because these happen incidentally to be available on the sub-sea structure. However, such protection anodes do not usually exist where navigation is required and, where they do exist, provide only a relatively ineffective form of antenna. A further problem with the system of US 6,865,139 is that it severely restricts the range over which position can be determined and limits the utility of the system to applications such as closely following a series of emitting beacons on a pipeline. Also, there is little information provided on how exactly the position is determined using the measure of electric field.

### Summary of the Invention

According to one aspect of the present invention, there is provided an underwater navigation system comprising: a transmitter having an electrically insulated magnetic coupled antenna for transmitting an electromagnetic and/or magneto-inductive signal, a receiver having an electrically insulated magnetic coupled antenna for coupling the magnetic component of an electromagnetic and/or magneto-inductive signal from the transmitter, and means for determining the position of the receiver relative to the transmitter using the received electromagnetic and/or magneto-inductive signal.

Using electrically insulated magnetic coupled antennas provides various advantages over the electrically coupled antennas used in US 6,865,139. As is known, a magnetic antenna formed by a wire loop, coil or similar arrangement creates both magnetic and electromagnetic fields. The magnetic or magneto-inductive field is generally considered to comprise two components of different magnitude that, along with other factors, attenuate with distance (r), at rates including a factor proportional to 1/r² and 1/r³ respectively. Together they are often termed the near field components. The electromagnetic field has a still different magnitude and, along with other factors, attenuates with distance at a rate including a factor proportional to 1/r. This is often termed the far field or propagating component.

Signals based on electrical and magnetic fields are rapidly attenuated in water due to the partially electrically conductive nature of the medium. Seawater is more conductive than fresh water and produces higher attenuation. Propagating radio or electromagnetic waves are a result of an interaction between the electric and magnetic fields. The high conductivity of seawater attenuates the electric field severely. Water has a magnetic permeability close to that of free space so that a purely magnetic field is relatively unaffected by this medium.

For these reasons, systems using magnetic coupled antennas are more efficient and can operate over greater distances under water than electrically coupled antennas. Electrically insulating the antenna provides further advantages. This is because for a non-insulated electrically coupled antenna, there is a direct conduction path between it and the dissipative water. This leads to dissipation as the signal propagates along the antenna even before the electromagnetic signal is launched. Providing an insulated antenna reduces this effect.

The means for determining the position may be operable to determine the distance of the receiver from the transmitter and/or the direction of the receiver relative to the transmitter. In a preferred embodiment, the determining means are operable to use the signal strength at the receiver to determine the distance and/or direction.

An electromagnetic wave can be characterised by magnitude (averaged over a cycle) and phase variation over time and space. Non-propagating near field components can be characterised in the same way. In air or free space, electromagnetic attenuation is low and phase varies with distance much more rapidly than magnitude. In air and free space direction finding techniques for remote sensing are based almost exclusively on phase information. Under water electromagnetic waves are rapidly attenuated and loss increases with frequency. In this environment the signal magnitude varies more rapidly than phase. The inventors of the navigation system described herein are the first to recognise this fundamental difference and to describe navigation techniques that exploit this by using signal strength to determine proximity based on the strength of a received signal for given transmitter power and propagation characteristics.

In order to determine relative position using received signal magnitudes, a loss vector can be used. Measurement of this loss vector gives an indication of the bearing from the receiver to the transmitter. The loss vector has a magnitude, which quantifies the rate of change of field strength, and a direction. To establish a three dimensional loss vector, four field strength measurements are necessary, one to define an origin or point of reference and three others to allow the three dimensional direction to be determined relative to the origin or point of reference. Typically, this would be done using the standard Cartesian co-ordinate system, although this is not essential. In some cases, the loss vector could be restricted to two dimensions, for example, when the transmitter is known to be on the sea floor. In this case, only three measurements would be needed.

In addition or as an alternative to using field strength, the distance and/or direction may be determined using the direction of signal propagation at the receiver and/or the time taken for a signal to travel between the transmitter and the receiver, i.e. a measure of signal delay.

At a fixed frequency, relative distance can be determined by comparing the relative delays of signals as received by the antennas. Signal delay or phase shift (its equivalent at a known frequency) is proportional to distance between the transmitter and the receiver,. Therefore, the differences can be used to calculate coordinates in a similar manner to signal strength differences. For delay to be used unambiguously, it will usually be necessary that the wavelength of the signal be smaller than the expected distance to and from the object. Phase measurement techniques will be necessary for ranges comparable to the operating wavelength. Throughout this document "delay" shall be used as a single term encompassing general timing techniques, including phase.

The receiver antenna may be a directional antenna and the means for determining may be operable to use the directionality of the receiver to determine the relative directional position of the transmitting beacon. More specifically, the direction of transmitted signal propagation may be determined by alignment of a highly directional antenna.

The determining means may be operable to determine the location of the transmitter using the field strength and/or delay at three or more receiver positions. To do this, three or more receiver antennas may be provided and the determining means may be operable to determine the location of the beacon by comparison of the field strength of the signal received at each antenna. The three or more receivers may be positioned on the navigation station/mobile vehicle. Alternatively, a single receiver antenna may be provided and the determining means may be operable to determine the location of the transmitter by comparison of the field strength and/or delay of the signal received at three or more different receiver locations.

The transmitter and receiver may be operable to simultaneously provide a communication link or links.

The determining means for determining the position of the station may use signals received by the receiving means at three or more different positions.

By using signals received at a plurality of different receiver positions, the position of the navigation station can be determined relative to a single transmitter. This reduces the number of beacons required and allows applications where location of an isolated object is required rather than the distributed objects required by a multiple transmit antenna system.

The receiving means may comprise three or more spatially separated receivers. In this case, the determining means may be operable to determine the position of the station using a signal from each of the receivers. An advantage of this is that the measurements can be taken simultaneously.

The receiving means may include a single antenna. To determine the position of the station, the antenna would be moved to three or more different measurement positions. This could be done either by moving the station or by moving the antenna. In this latter case, the antenna could be provided at the end of a rotating arm. In any case, an inertial navigation system could provide accurate short-term knowledge of the relative position of successive measurements as the vehicle moves through the water. Position relative to the beacon may then be determined using standard trigonometry.

The means for determining may be operable to determine the directional position of the receiver using the magnitude and/or delay of the field at the plurality of receiver positions.

The means for determining the position may be operable to determine proximity to the transmitter using the magnitude and/or delay of the signal received at one or more receiver positions.

Means for determining the position of the receiver using the magnitude and/or delay of the received signal may be provided.

Determining means for determining the direction of propagation using field strength or delay at three or more receiver locations may be provided.

Three or more receiver antennas may be provided and the determining means may be operable to determine the direction of propagation by comparison of the field strength or delay of the signal received at each antenna.

Alternatively, a single receiver antenna may be provided and the determining means may be operable to determine the direction of propagation by comparison of the field strength and/or delay of the signal received at three or more different receiver locations.

Multiple transmit beacons may be used in conjunction with a single receiver. In this case, the receiver has knowledge of the relative positions of the transmitting beacons and can determine its position based on the loss vector signal strength or phase methods described above. This has the advantage of allowing the calculation of position based on measurements at a single receiver location instead of requiring combined receiver bearing positions as is needed for the single transmitter case. Individual beacons would be identified by modulation of the transmitted signal, use of different frequencies or transmission at different times or inclusion in the transmitted signal of some form of identifier or marker

One of the antennas may be above the water surface in air. Either the receiver, typically carried on a navigating station, or the transmitting beacon could be situated above the water. The near field magneto-inductive components of the electromagnetic signal can pass through the water-air interface. This would allow an aircraft to locate a submerged beacon or, alternatively, a submerged navigating station could detect the presence of an aircraft.

According to another aspect of the invention, there is provided an underwater navigation system comprising an elongate cable transmitter for transmitting an electromagnetic and/or magneto-inductive signal, a receiver having an electrically insulated magnetic coupled antenna for receiving an electromagnetic and/or magneto-inductive signal from the transmitter, and determining means for determining the position of the receiver using the received electromagnetic and/or magneto-inductive signal.

The transmitter may include means for generating an acoustic signal as well as an electromagnetic signal, wherein the determining means are operable to use both the receiver electromagnetic signal and the received acoustic signal to determine the position of the receiver. Preferably, the acoustic signal and the electromagnetic signal are generated simultaneously.

The determining means may be operable to determine proximity of the receiver to the transmitter. This would allow a moving vehicle to detect when it is in close proximity to a transmitter beacon. This could be used as a reference point for base-lining an inertial navigation system.

### Brief Description of Drawings

Various aspects of the invention will now be described by way of example only and with reference to the accompanying drawings, of which:
Figure 1 is a block diagram of an underwater navigation system;
Figure 2 is a block diagram of an underwater transmitter for use in the underwater navigation system of Figure 1;
Figure 3 is a block diagram of an underwater receiver for use in the navigation system of Figure 1;
Figure 4 is a diagrammatic representation of a magnetically coupled solenoid antenna in a waterproof enclosure for use in the transmitter of Figure 2 and the receiver of Figure 3;
Figure 5 is a diagrammatic representation of a direction finding technique;
Figure 6 is a block diagram of a receiver arrangement for use in the technique of Figure 5;
Figure 7 is a diagrammatic representation of a range finding technique
Figure 8(a) is a block diagram of a transponder for use in the range finding technique of Figure 7;
Figure 8(b) is a block diagram of a navigation station for use in the range finding technique of Figure 7;
Figure 9 is a diagrammatic representation of another direction finding technique;
Figure 10 is a diagrammatic representation of the field pattern produced by a magnetically coupled solenoid antenna and
Figure 11 represents a distributed radiating cable and a navigating vehicle that locates the cable by means of detecting the radiated signal.

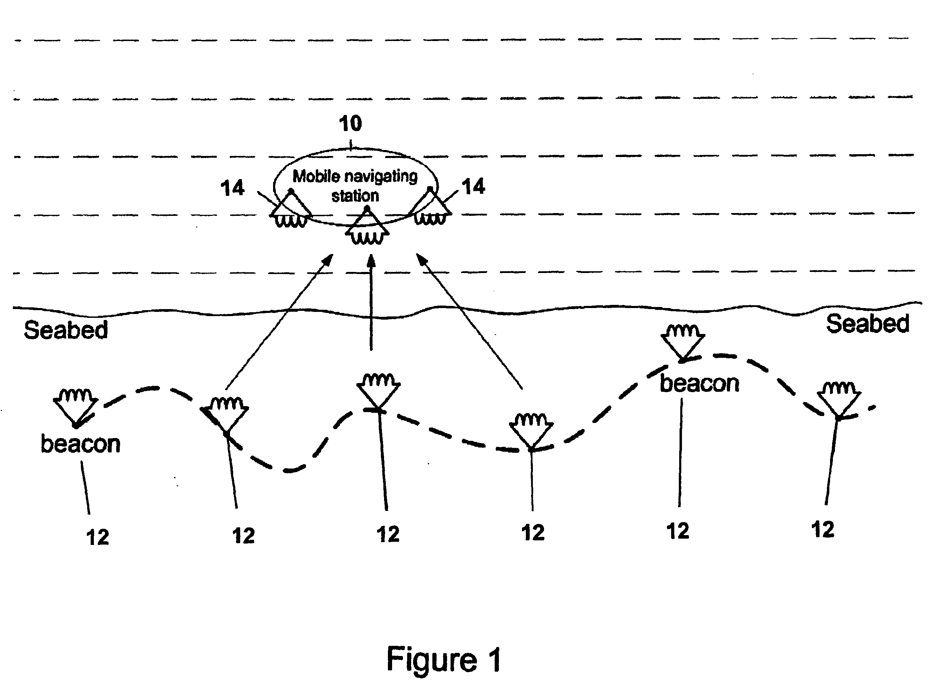

Figure 1 shows a mobile navigating station 10 that is operable to navigate around an underwater environment using signal radiation transmitted between one or more fixed position beacons 12 and at least one receiver 14 carried on the mobile station 10. Due to the short range nature of high frequency underwater electromagnetic and magneto-inductive propagation, if a signal is detectable above a given threshold the receiver's 14 position is known to be in close proximity to the transmitting beacon 12. To allow the navigating station 10 to differentiate between individual sources in a multi-beacon environment, the transmitting beacons 12 may produce an identifying signal. For example, each transmitter 12 may broadcast on a different frequency. Alternatively, each transmitter 12 may encode some form of identifying modulation.

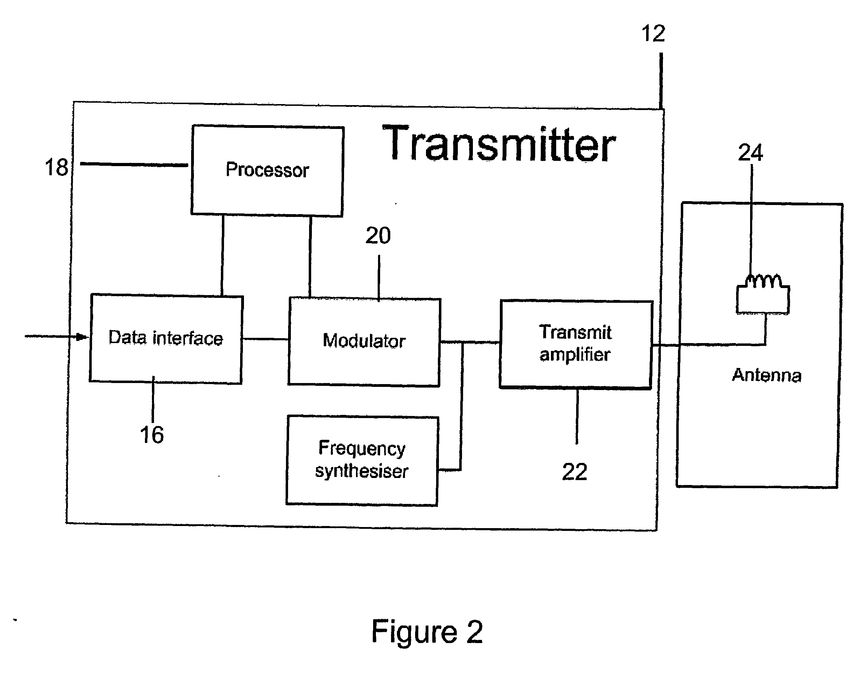

Figure 2 shows an example of a transmitter or beacon 12 for use in the mobile station 10 of Figure 1. This has a data interface 16 that is connected to each of a processor 18 and a modulator 20. The modulator 20 is provided to encode data onto a carrier wave. At an output of the modulator 20 is a transmit amplifier 22, which is connected to an underwater, electrically insulated magnetic coupled antenna 24. In use, the processor 20 is operable to cause electromagnetic and/or magneto-inductive navigation signals to be transmitted at regular intervals or in response to an external signal, for example from the mobile station 10. These signals can be received and used as a guide or navigational aid by any mobile station 10 in the vicinity.

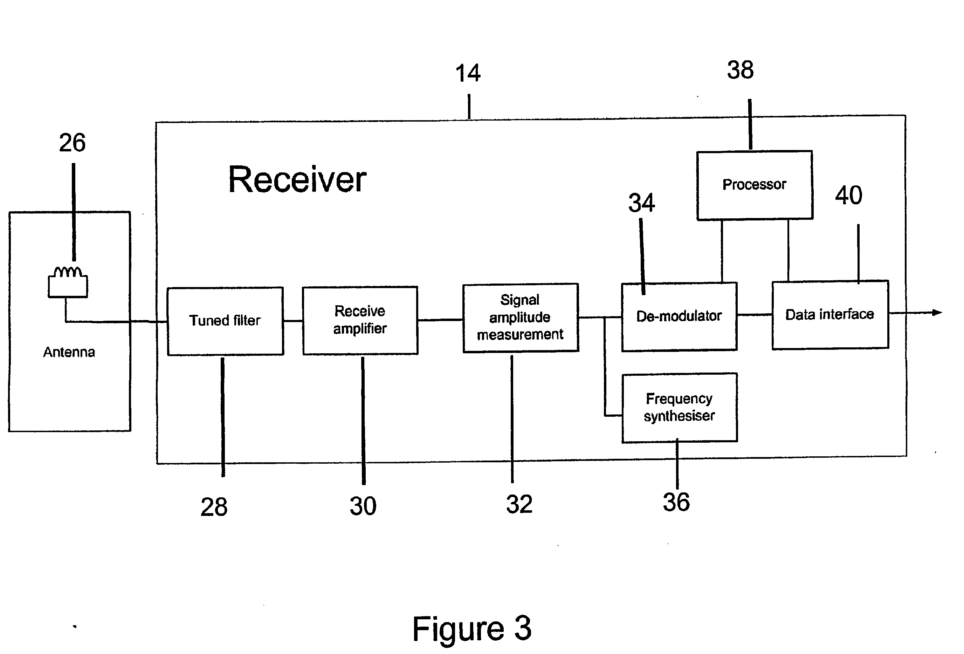

Figure 3 shows an example of a receiver for use in the mobile station of Figure 1. This has an electrically insulated magnetic coupled antenna 26 adapted for underwater usage. This antenna 26 is operable to receive magnetic field signals from the transmitter antenna 24. Connected to the antenna 26 is a tuned filter 28 that is in turn connected to a receive amplifier 30. At the output of the amplifier 30 is a signal amplitude measurement module 32 that is coupled to a de-modulator 34 and a frequency synthesiser 36 that provides a local oscillator signal for down conversion of the modulated carrier. Connected to the de-modulator 34 is a processor 38 that is in turn connected to a data interface 40. The data interface 40 is provided for transferring data from the receiver to a control or monitoring means, which may be located in the mobile device 10 or at another remote location.

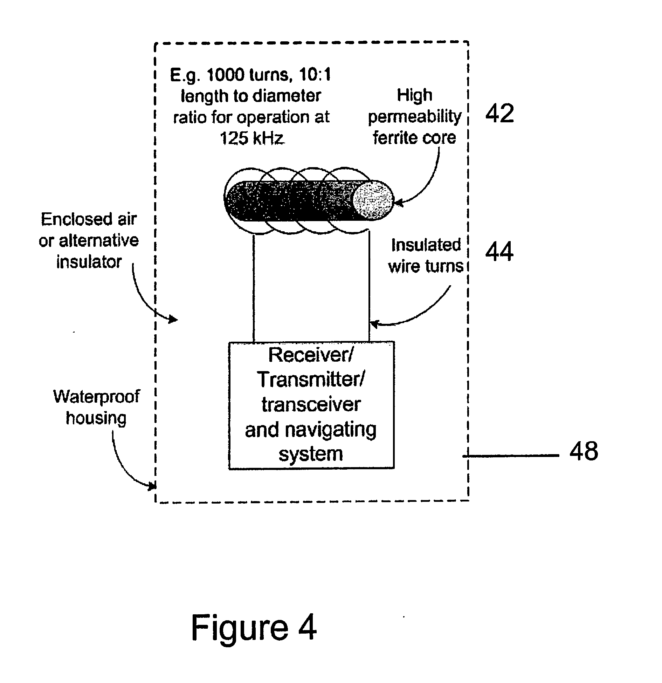

Figure 4 shows an example of an electrically insulated, magnetic coupled antenna that can be used in the transmitter 12 and receiver 14 of Figures 2 and 3. This has a high permeability ferrite core 42. Wound round the core 42 are multiple loops of an insulated wire 44. The number of turns of the wire 44 and length to diameter ratio of the core 42 can be selected depending on the application. However, for operation at 125kHz, one thousand turns and a 10:1 length to diameter ratio is suitable. The antenna 24, 26 is connected to the relevant transmitter or receiver and is included in a waterproof housing 48. Within the housing 48 the antenna may be surrounded by air or some other suitable insulator, for example, an impedance matched low conductivity medium such as distilled water.

In use, the receiver 14 is operable to receive signals from the transmitter 12 and use these to determine an indication of its own, relative position. In some circumstances, merely being in range of a transmitter 12 may provide enough information. However, if more detailed information is needed, such as the actual distance from the transmitter 12, the receiver 14 may be operable to use the strength of the received signal. In this case, information would have to be stored on the expected strength of a received signal for a given transmitter power and propagation characteristics as a function of distance. For most applications calculation of the receiver's range to the transmitter can be based on a typical physical model of the underwater environment (e.g. expected loss versus range). This model could be improved by measurement of attenuation using a comparison of signal strength between multiple receiver antennas with known relative position within the navigating station.

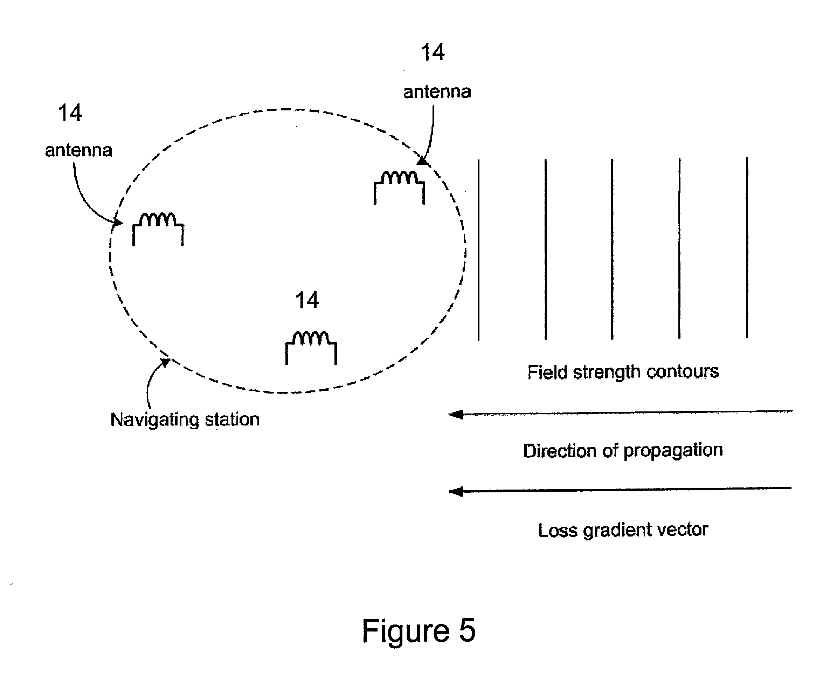

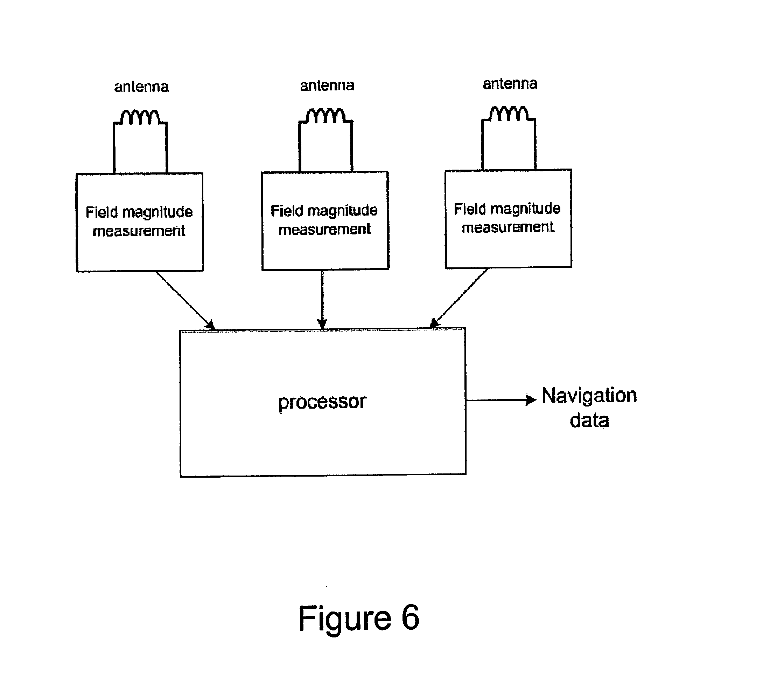

The system of Figures 1 to 4 allows a measure of the proximity of a mobile station 10 to one or more beacons 12, but not the relative direction. To determine the direction, a direction finding system can be used. Figure 5 shows one embodiment for doing this. In this case, at least three receiver measurements are required, at different locations. This can be done using, for example, each of the three antennas 14 that are distributed across the hull of the navigating station 10 of Figure 1. Alternatively, a single receiver antenna could be used and merely moved between three or more different measurement positions either by movement of the navigation station and/or using a mechanism for moving it independently of the station. As an example of a suitable mechanism, the antenna may be provided on a rotatable arm. In any case, the strength of an electromagnetic signal emitted from a beacon 12 is measured at each receiver position and made available to a processor in the station, as shown in Figure 6.

Because the field strength is attenuated in the direction of propagation, the position of the station 10 relative to that beacon 12 can be determined by calculating a local loss gradient vector using a comparison of the field strength at the three antennas. Attenuation will be measurable within the dimensions of a typical mobile station 10 that might, for example, accommodate three antennas 14 at the vertices of an equilateral triangle with, for example a separation of two metres. The loss vector can be calculated by simple geometry using an algorithm executed by the navigation station processor. A positional fix may be obtained by using the loss gradient as an angular bearing relative to several distributed transmitting beacons 12. Alternatively, the loss gradient vector can be used to navigate with respect to an individual transmission source 12.

For the sake of clarity, Figure 5 shows three measurements being at three different receiver locations. This allows a two-dimensional direction to be determined. However, in many circumstances, three-dimensional bearing fixes will be needed. Here, four receiver measurements would be required at different three-dimensional spacings. In this case, the first measurement would be used to form the origin or point of reference. For the sake of simplicity, a Cartesian co-ordinate system would typically be used, although any other co-ordinate systems would be equally applicable. A further three field strength measurements would then be made at an equal distance along each of the three axes. This set of measurements would give three orthogonal loss vector components, which would allow the direction of arrival and magnitude of the loss vector to be established through standard geometry.

The antenna arrangement of Figure 5 is also applicable to phase or delay based direction finding. Again, as an example, a three dimensional bearing can be deduced from four orthogonal sensor measurements. Measurement of timing offset in three orthogonal axes will allow calculation of the direction of signal arrival. The timing offset will be at a minimum in the direction of propagation.

Whilst in the system of Figure 5, multiple receiver positions are used to determine position, the basic position finding principles could equally be applied to a system that uses measurement at a single receiver location, but from multiple transmit beacons. In this case, the receiver has knowledge of the relative positions of the transmitting beacons and can determine its position based on the loss vector, signal strength or phase methods described above. Individual beacons would be identified by modulation of the transmitted signal, use of different frequencies or inclusion in the transmitted signal of some form of identifier or marker. Another option is to use a system of synchronised multiple transmitters with known relative positions, so that the relative time of arrival of identified signals from each transmitter will allow calculation of receiver position.

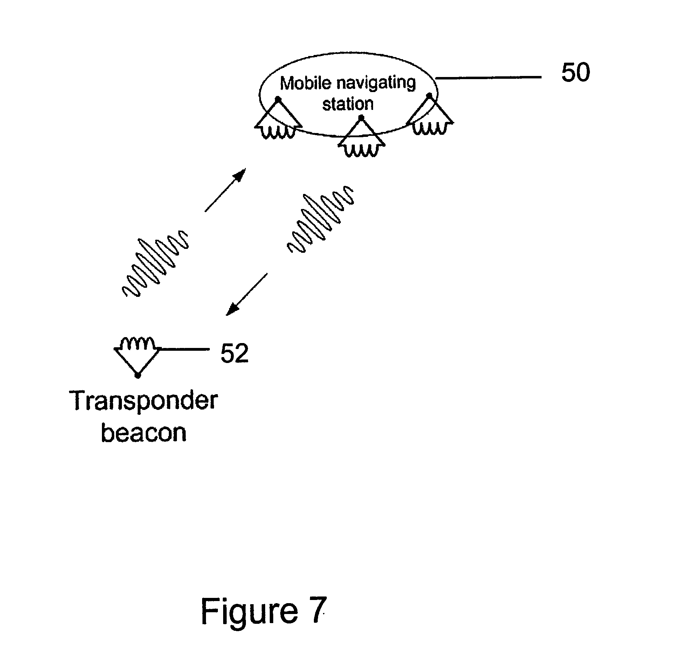

Figure 7 illustrates another method of determining relative position. This is based on measurement of propagation time between the navigating station 50 and a beacon 52. In this case, the navigating station 50 transmits a pulse that is received by a transponder beacon 52 and re-transmitted with an accurately controlled time delay. The navigating station 50 receives the signal from the transponder 52 and calculates its relative range based on the round trip timing. To implement this method, the velocity of propagation has to be known. This may be determined by comparison of timings between multiple antennas of known spacing within the navigating station or based on a model of the propagating medium. The loss vector approach described above could equally be used here.

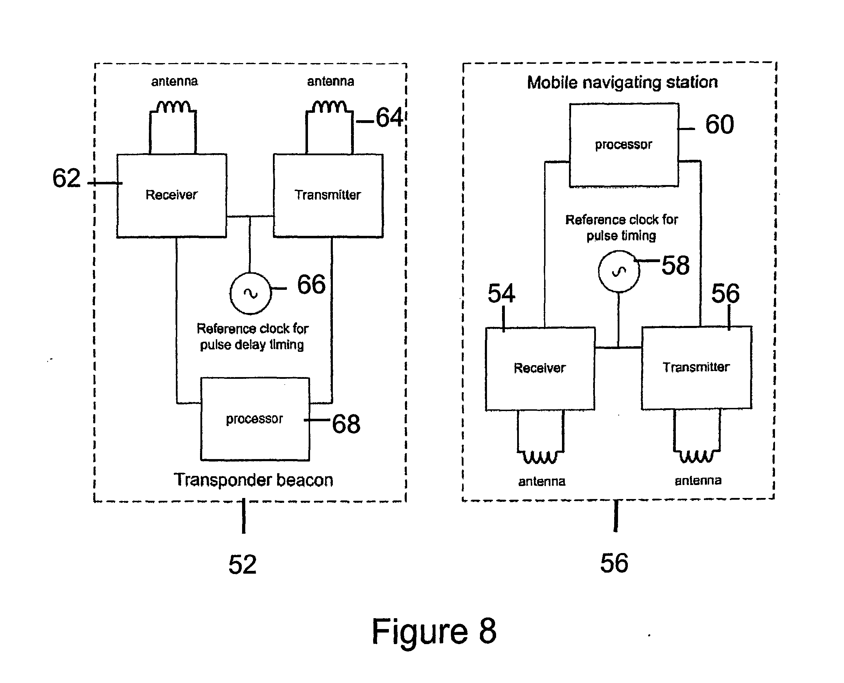

Figures 8(a) and (b) illustrate a navigation station 50 and a transponder beacon 52 for implementing the method of Figure 7. Both the navigation station 50 and the transponder beacon 52 have a receiver 54, 62, a transmitter 56, 64, a clock 58, 66 and a control processor 60, 68, and both know or have access to a pre-determined time delay. When the navigation station 50 wants to know its position relative to a beacon 52, its processor 60 causes the transmitter to transmit a signal. Simultaneously with transmitting the signal, the station clock 58 is started. When a signal is received at the transponder beacon 52, its processor 68 waits for the pre-determined time, before sending a return signal to the navigation station 50. When the return signal is subsequently received at the navigation station 50 the internal clock 58 is used to determine the round trip time. Because the pre-determined time, the velocity of propagation and the round trip time are known, the station processor 60 is able to calculate the distance between the station 50 and the beacon 52.

A combined electromagnetic and acoustic system could provide an alternative method of measuring distance in a single step measurement without the need for round trip timing. In this case a transmitting beacon could simultaneously transmit an electromagnetic and acoustic signal. The two types of signal propagate at different velocities. The difference between the time of arrival of an electromagnetic signal and audio signal generated simultaneously is directly proportional to the range to the source. Distance from the beacon can be calculated based on the time separation of the two signals and knowledge of the difference in their propagation velocity. Propagation velocity can be measured using a transmitter and receiver mounted at a known separation or could be calculated based on a model of the propagating media

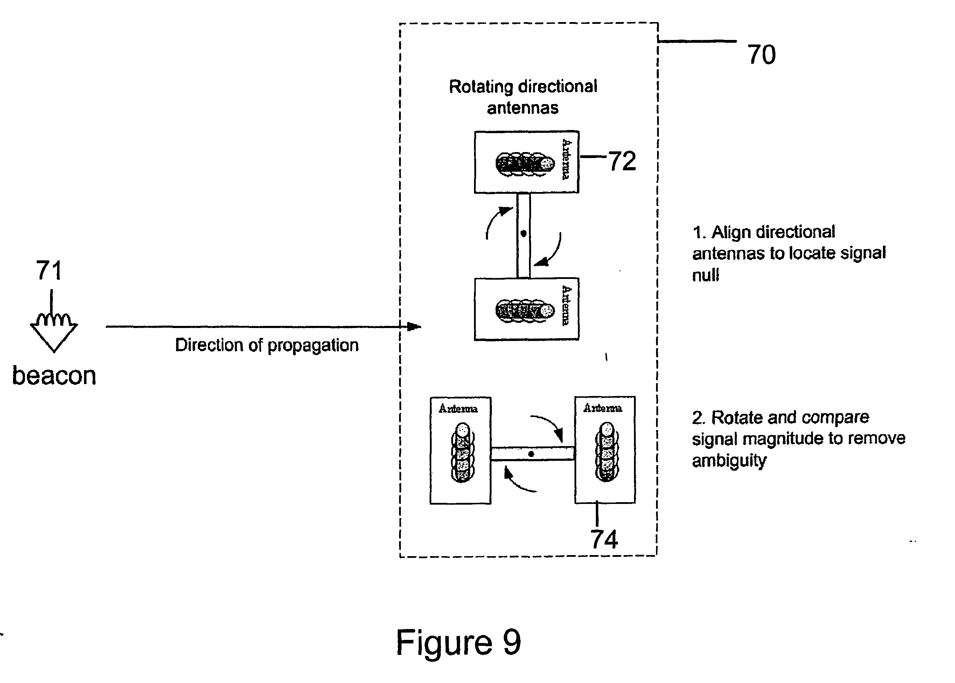

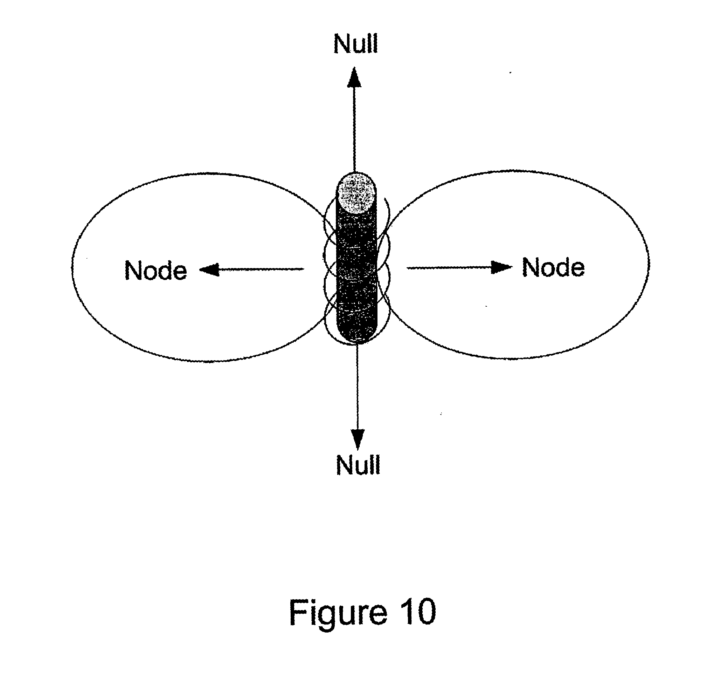

Figure 9 shows another navigation system based on a mobile navigation station 70 and a transponder beacon 71. In this case, the navigation station 70 includes a highly directional antenna 72, such as a multiple turn solenoid wound around a ferrite rod. This type of antenna 72 generates a radiation pattern with a null point aligned to waves propagating along the axis of the rod as illustrated in Figure 10. The antenna 72 could be rotated until a minimum is located in the received signal strength. As will be appreciated, a single antenna of this type would result in a 180 degree ambiguity. This can be resolved by comparing the signal strength from a second antenna 74 located at some distance from the first to establish the approximate direction of the loss gradient.

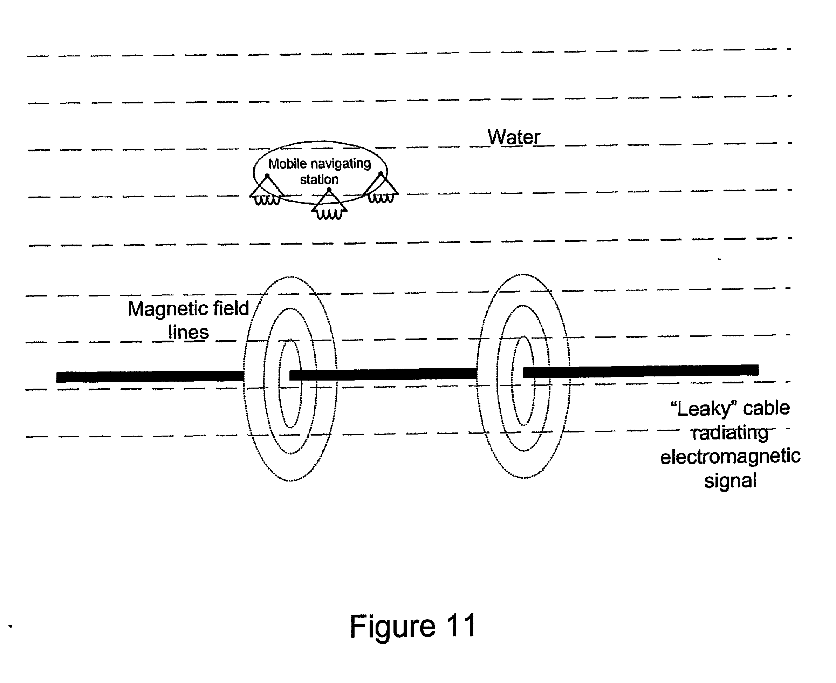

Figure 11 shows a distributed radiating cable and a navigating vehicle that locates the cable by means of detecting the radiated signal. This allows the vehicle to follow a pre-determined route by tracking the signal. The cable is designed to radiate part of the electromagnetic signal that it is conducting. The cable takes the place of the transmitting beacon as described in any of the preceding descriptions. A distributed cable has the advantage that it represents a continuous linear source that can define a route for a tracking navigating vehicle. The vehicle could follow the cable by means of a simple signal strength measurement. The cable is located by travelling approximately perpendicular to its length until a signal is received at the navigating station. The cable can then be tracked using a control loop that monitors received signal strength and how it varies in response to movement. For movement in any given direction the received signal will increase, decrease or stay constant. This will represent movement away from the cable, closer to it, or along its length.

For any of the radio transmitter and receiver navigation systems described above, the navigation beacon could remain in receive mode until it decodes a valid demand signal transmitted by the navigating station. An advantage of this is that the beacons would remain covert. Also, this arrangement would reduce power consumption at remote beacon deployments thereby extending their operational life. Beacon and navigating stations both require transceivers for a system configuration of this type.

Because the attenuation of electromagnetic and magneto-inductive signals with distance is quite severe in the partially conductive medium of water, it is important that a navigation system is adapted to overcome the difficulty of attenuation as far as possible. From the standpoint of maximising operating distance from a transmitter to receiver, the lowest possible signal frequency is desirable. This is the case in such an environment because the loss expressed in decibels encountered by an electromagnetic signal is substantially proportional to the square root of signal frequency. However, while a very low frequency maximises the received signal, such a signal can be difficult to use as part of direction finding techniques with high accuracy.

In accordance with this invention, both good signal strength and good accuracy can be achieved when each is necessary. When a mobile navigating station is some distance from a transmit beacon which it wishes to approach, high directional accuracy is unnecessary. It is usually sufficient to move in broadly the correct direction and, for this purpose a low frequency signal is desirable to increase the distance at which the beacon can be detected. When the mobile navigating station becomes closer to the beacon, signal strength will increase, and so the signal frequency utilised can be increased in order to improve accuracy of direction finding. It may be optimal to increase the utilised transmit frequency in stages as accuracy becomes progressively more important and with signal strength remaining adequate.

Persons skilled in the art will recognise various ways in which an adaptable signal frequency can be provided. As one example, the beacon itself could transmit signals simultaneously of more than one frequency, and the navigating station could begin the process by looking for the lowest frequency first. As another example, the mobile navigating station could send initially a low frequency control signal to command the beacon to begin transmitting at a low frequency, and subsequently at closer proximities could command use of higher signal frequencies as accuracy became more important.

A skilled person will appreciate that variations of the disclosed arrangements are possible without departing from the invention. For example, although the beacons of Figure 1 are shown in a line arrangement, it will be appreciated that they could equally be arranged in a two or three-dimensional grid. Additionally, the navigating beacons may be operable to communicate their absolute position in space with reference to a standard co-ordinate system, for example latitude, longitude and altitude, so that an absolute receiver position can be determined rather than merely a relative measure.

In addition to the functionality described above, the systems in which the invention is embodied could be used to implement communications links. Also, whilst the systems and methods described are generally applicable to seawater, fresh water and any brackish composition in between, because relatively pure fresh water environments exhibit different electromagnetic propagation properties from saline seawater, different operating conditions may be needed in different environments. Any optimisation required for specific saline constitutions will be obvious to any practitioner skilled in this area. Accordingly the above description of the specific embodiment is made by way of example only and not for the purposes of limitation. It will be clear to the skilled person that minor modifications may be made without significant changes to the operation described.

## Claims

1. An underwater navigation system comprising a transmitter having an electrically insulated magnetic coupled antenna for transmitting an electromagnetic and/or magneto-inductive signal, a receiver having an electrically insulated magnetic coupled antenna for receiving an electromagnetic and/or magneto-inductive signal from the transmitter, and determining means for determining the position of the receiver using the received electromagnetic and/or magneto-inductive signal.

2. An underwater navigation system as claimed in claim 1, wherein the determining means are operable to determine the position using signals received at three or more receiver positions.

3. An underwater navigation system as claimed in claim 2, wherein a single receiver is provided and the determining means are operable to determine position using signals received at that receiver at three or more receiver positions.

4. An underwater navigation system as claimed in claims 2 wherein three or more receiver antennas are provided and the determining means are operable to determine position using signals received at each antenna.

5. An underwater navigation system as claimed in any of the preceding claims wherein the determining means are operable to determine the distance of the receiver from the transmitter and/or the direction of the receiver relative to the transmitter.

6. An underwater navigation system as claimed in any of the preceding claims wherein the determining means are operable to use signal strength at the receiver and/or the direction of signal propagation at the receiver and/or the time taken for a signal to travel between the transmitter and the receiver.

7. An underwater navigation system as claimed in claim 6 wherein the determining means are operable to compare the received signal strength with a strength/distance model to determine a measure of the distance between the receiver and transmitter.

8. An underwater navigation system as claimed in any of the preceding claims wherein each insulated antenna is surrounded by an impedance-matched low conductivity medium, for example distilled water.

9. An underwater navigation system as claimed in any of the preceding claims wherein the receiver antenna is a directional antenna and the determining means are operable to use the directionality of the receiver to determine the relative directional position.

10. A system as claimed in claim 9 wherein a single receiver antenna is provided and the determining means are operable to determine the direction of propagation by moving the antenna to three or more different locations.

11. An underwater navigation system as claimed in any of the preceding claims wherein the frequency of the electromagnetic and/or magneto-inductive signal is changed to optimise performance under different conditions.

12. An underwater navigation system comprising an elongate cable transmitter for transmitting an electromagnetic and/or magneto-inductive signal, a receiver having an electrically insulated magnetic coupled antenna for receiving an electromagnetic and/or magneto-inductive signal from the transmitter, and determining means for determining the position of the receiver using the received electromagnetic and/or magneto-inductive signal.

13. An underwater navigation system as claimed in any of the preceding claims wherein the transmitter includes means for generating an acoustic signal, wherein the determining means are operable to use both the receiver electromagnetic signal and the received acoustic signal to determine the position of the receiver.

14. An underwater navigation system as claimed in claim 13 wherein the determining means are operable to determine the distance between transmitter and receiver based on the difference in propagation speeds between acoustic and electromagnetic signals.

15. An underwater navigation system as claimed in claim 13 or claim 14 wherein the acoustic signal and the electromagnetic signal are generated simultaneously.

16. An underwater navigation system as claimed in any of the preceding claims wherein either the transmitter or receiver is submerged in water while the other is situated above the surface

17. A system as claimed in any of the preceding claims wherein the determining means are operable to determine proximity of the receiver to the transmitter.

18. A system as claimed in any of the preceding claims wherein the transmitter is operable to transmit a signal in response to an activation signal.

19. A system as claimed in any of the preceding claims wherein a plurality of transmitters is provided, and the determining means are operable to determine the position of the receiver using signals from the plurality of transmitters.

20. A system as claimed in claim 19 wherein the signal transmitted from each of the plurality of transmitters is individually identifiable.

21. A system as claimed in claim 20 wherein the signal transmitted from each of the plurality of transmitters is identifiable by virtue of a signal modulation or the use of different frequencies or transmissions separated in time.

## Patentansprüche

1. Ein Unterwasser-Navigationssystem bestehend aus einem Sender mit einer elektrisch-isolierten, magnetisch gekoppelten Antenne zur Übertragung elektromagnetischer und/oder magnetisch-induktiver Signale, einem Empfänger mit einer elektrisch-isolierten, magnetisch gekoppelten Antenne zum Empfang elektromagnetischer und/oder magnetisch-induktiver Signale vom Sender und einer Vorrichtung, welche die Position des Empfängers mit Hilfe der empfangenen elektromagnetischen und/oder magnetisch-induktiven Signale bestimmt.

2. Ein Unterwasser-Navigationssystem wie in Anspruch 1, bei welchem die Positionierungsvorrichtung die Position mit Hilfe von Signalen bestimmen kann, die von drei oder mehr Empfängerpositionen erhalten werden.

3. Ein Unterwasser-Navigationssystem wie in Anspruch 2, welches mit einem einzelnen Empfänger ausgestattet ist und bei welchem die Positionierungsvorrichtung die Position mit Hilfe von Signalen bestimmen kann, die von diesem Empfänger an drei oder mehr Empfängerpositionen empfangen werden.

4. Ein Unterwasser-Navigationssystem wie in Anspruch 2, welches mit drei oder mehr Empfangsantennen ausgestattet ist und bei welchem die Positionierungsvorrichtung die Position mit Hilfe von Signalen bestimmen kann, die an jeder der Antennen empfangen werden.

5. Ein Unterwasser-Navigationssystem wie in allen vorhergehenden Ansprüchen, bei welchem die Positionierungsvorrichtung die Distanz des Empfängers vom Sender und/oder die Position des Empfängers relativ zum Sender bestimmen kann.

6. Ein Unterwasser-Navigationssystem wie in allen vorhergehenden Ansprüchen, bei welchem die Positionierungsvorrichtung in der Lage ist, die Signalstärke beim Empfänger und/oder die Richtung der Signalübertragung beim Empfänger und/oder die Zeit, die ein Signal für die Übertragung von Sender zum Empfänger benötigt, zu nutzen.

7. Ein Unterwasser-Navigationssystem wie in Anspruch 6, bei welchem die Positionierungsvorrichtung in der Lage ist, die Stärke des empfangenen Signals mit einem Stärke/Entfernungs-Modell zu vergleichen und dadurch die Distanz zwischen Sender und Empfänger zu berechnen.

8. Ein Unterwasser-Navigationssystem wie in allen vorhergehenden Ansprüchen, bei welchem jede isolierte Antenne von einem Impedanzangepassten Medium mit geringer Leitfähigkeit, wie zum Beispiel destilliertem Wasser, umgeben ist.

9. Ein Unterwasser-Navigationssystem wie in allen vorhergehenden Ansprüchen, wobei die Empfängerantenne eine Richtantenne ist und die Positionierungsvorrichtung in der Lage ist, mit Hilfe der Richtwirkung des Empfängers die relative Richtposition zu bestimmen.

10. Ein System wie in Anspruch 9, wobei eine einzelne Empfängerantenne vorhanden ist und die Positionierungsvorrichtung in der Lage ist, die Richtung der Übertragung durch Bewegung der Antenne an drei oder mehr verschiedene Standorte zu bestimmen.

11. Ein Unterwasser-Navigationssystem wie in allen vorhergehenden Ansprüchen, bei welchem die Frequenz des elektromagnetischen und/oder magnetisch-induktiven Signals verändert wird, um die Leistung unter verschiedenen Bedingungen zu optimieren.

12. Ein Unterwasser-Navigationssystem mit langgestrecktem Kabelsender zur Übertragung von elektromagnetischen und/oder magnetisch-induktiven Signalen, einem Empfänger mit elektrisch-isolierter, magnetisch gekoppelter Antenne zum Empfang elektromagnetischer und/oder magnetisch-induktiver Signale vom Sender und einer Vorrichtung zur Bestimmung der Position des Empfängers unter Verwendung des empfangenen elektromagnetischen und/oder magnetisch-induktiven Signals.

13. Ein Unterwasser-Navigationssystem wie in allen vorhergehenden Ansprüchen, wobei der Sender akustische Signale erzeugen kann und die Positionierungsvorrichtung sowohl das elektromagnetische Signal des Empfängers als auch das empfangene akustische Signal zur Positionsbestimmung des Empfängers nutzen kann.

14. Ein Unterwasser-Navigationssystem wie in Anspruch 13, bei welchem die Positionierungsvorrichtung in der Lage ist, die Distanz zwischen Sender und Empfänger aufgrund der unterschiedlichen Verbreitungsgeschwindigkeiten von akustischen und elektromagnetischen Signalen zu bestimmen.

15. Ein Unterwasser-Navigationssystem wie in Anspruch 13 oder Anspruch 14, bei welchem das akustische und das elektromagnetische Signal gleichzeitig erzeugt werden.

16. Ein Unterwasser-Navigationssystem wie in allen vorhergehenden Ansprüchen, wobei sich entweder der Sender oder der Empfänger unter Wasser befindet, während sich der Andere an der Oberfläche befindet.

17. Ein System wie in allen vorhergehenden Ansprüchen, bei welchem die Positionierungsvorrichtung die Nähe des Senders zum Empfänger bestimmen kann.

18. Ein System wie in allen vorhergehenden Ansprüchen, bei welchem der Sender ein Signal als Reaktion auf ein Aktivierungssignal aussenden kann.

19. Ein System wie in allen vorhergehenden Ansprüchen, bei welchem eine Vielzahl an Sendern zur Verfügung steht und die Positionierungsvorrichtung mit Hilfe der von einer Vielzahl an Sendern empfangenen Signale die Position des Empfängers bestimmen kann.

20. Ein System wie in Anspruch 19, bei welchem jedes Signal, das von einem der vielzähligen Sender gesendet wird, eindeutig identifiziert werden kann.

21. Ein System wie in Anspruch 20, bei welchem jedes Signal, das von einem der vielzähligen Sender gesendet wird, aufgrund einer Signalmodulation, der Verwendung unterschiedlicher Frequenzen oder zeitlich versetzter Übertragung identifiziert werden kann.

## Revendications

1. Un système de navigation sous-marine comprenant un émetteur doté d'une antenne magnétique attelée isolée électriquement pour émettre un signal magnéto-inductif et/électromagnétique, un récepteur doté d'une antenne magnétique attelée isolée électriquement pour recevoir un signal magnéto-inductif et/électromagnétique de l'émetteur et de moyens de détermination pour déterminer la position du récepteur en utilisant un signal magnéto-inductif et/électromagnétique.

2. Un système de navigation sous-marine, tel que revendiqué dans la revendication n°1, dont les moyens de détermination sont opérationnels pour déterminer la position au moyen de signaux reçus au niveau de trois ou plusieurs positions du récepteur.

3. Un système de navigation sous-marine, conformément à la revendication n°2, dont un unique récepteur est fourni et dont les moyens de détermination sont opérationnels pour déterminer la position en utilisant les signaux reçus par ce récepteur au niveau de trois ou plusieurs positions du récepteur.

4. Un système de navigation sous-marine conformément à la revendication n°2, dont trois ou plusieurs antennes de réception sont fournies et les moyens de détermination sont opérationnels pour déterminer la position en utilisant des signaux reçus à chaque antenne.

5. Un système de navigation sous-marine comme détaillé dans toutes les revendications précédentes, dont les moyens de détermination sont opérationnels pour déterminer la distance entre le récepteur et l'émetteur et/ou l'orientation du récepteur par rapport à l'émetteur.

6. Un système de navigation sous-marine, comme détaillé dans toutes les revendications précédentes, dont les moyens de détermination sont opérationnels pour mesurer la puissance du signal du récepteur et/ou l'orientation de propagation du signal au niveau du récepteur et/ou le temps nécessaire pour qu'un signal voyage entre l'émetteur et le récepteur.

7. Un système de navigation sous-marine, conformément à la revendication n°6, dont les moyens de détermination sont opérationnels pour comparer la puissance du signal reçu avec un modèle force/distance afin de mesurer la distance entre le récepteur et l'émetteur.

8. Un système de navigation sous-marine, comme détaillé dans toutes les revendications précédentes, dont chaque antenne attelée est entourée d'un milieu qui combine faible impédance et faible conductivité, comme de l'eau distillée par exemple.

9. Un système de navigation sous-marine comme détaillé dans toutes les revendications précédentes, dont l'antenne du récepteur est une antenne directionnelle et les moyens de détermination sont opérationnels pour utiliser la directionnalité du récepteur afin de déterminer la position directionnelle relative.

10. Un système, conformément à la revendication n°9, doté d'une antenne de récepteur unique et dont la détermination des moyens est utilisable pour déterminer la direction de propagation en déplaçant l'antenne à trois ou plusieurs endroits différents.

11. Un système de navigation sous-marine, comme détaillé dans toutes les revendications précédentes, dont la fréquence de signal électromagnétique et/ou magnéto-inductif est modifiée pour optimiser ses performances dans différentes conditions.

12. Un système de navigation sous-marine comprenant un câble d'allongement d'émetteur pour émettre un et/ou des signaux électromagnétiques magnéto-inductifs, un récepteur ayant une antenne magnétique attelée électriquement isolée pour recevoir un signal électromagnétique et/ou magnéto-inductif de l'émetteur, et des moyens de détermination pour déterminer la position du récepteur en utilisant le récepteur électromagnétique et/ou le signal magneto-inductif.

13. Un système de navigation sous-marine, comme détaillé dans toutes les revendications précédentes, dont l'émetteur comprend des moyens pour générer un signal acoustique, et dont les moyens de détermination sont opérationnels pour utiliser à la fois le signal électromagnétique du récepteur et le signal acoustique reçu pour déterminer la position du récepteur.

14. Un système de navigation sous-marine, conformément à la revendication n°13, dont les moyens de détermination sont opérationnels pour déterminer la distance entre l'émetteur et le récepteur, sur la base de la différence de vitesses de propagation entre les signaux acoustiques et les signaux électromagnétiques.

15. Un système de navigation sous-marine, conformément à la revendication n°13 ou à la revendication 14, dont le signal acoustique et le signal électromagnétique sont générés simultanément.

16. Un système de navigation sous-marine, comme détaillé dans toutes les revendications précédentes, dont l'émetteur ou le récepteur est submergé dans l'eau tandis que l'autre se situe au-dessus de la surface.

17. Un système, comme détaillé dans toutes les revendications précédentes, dont les moyens de détermination sont opérationnels pour déterminer la proximité du récepteur à l'émetteur.

18. Un système, comme détaillé dans toutes les revendications précédentes, dont l'émetteur est utilisable pour transmettre un signal en réponse à un signal d'activation.

19. Un système, comme détaillé dans toutes les revendications précédentes, doté de plusieurs émetteurs, et dont les moyens de détermination sont opérationnels pour déterminer la position du récepteur grâce à des signaux issus des multiples émetteurs.

20. Un système, conformément à la revendication n°19, dont le signal transmis par chacun des multiples émetteurs est identifiable individuellement.

21. Un système, comme détaillé dans la revendication n°20, dont le signal transmis par chacun des multiples émetteurs est identifiable grâce à une modulation du signal ou grâce à l'utilisation de différentes fréquences ou transmissions espacées dans le temps.
